# EUROPEAN PATENT APPLICATION

(11) **EP 4 613 715 A2**
(43) Date of publication of application: **10.09.2025**
(21) Application number: 25191324.0
(22) Date of filing: 22.01.2019
(51) Int. Cl.: C02F 1/44

(54) **FOULING TYPE DETECTION**

(62) Divisional of application: 19153157.3
(71) Applicant: Grant Prideco, Inc., Wilmington, DE 19801 (US)
(72) Inventor: Lian, Pei Ling, 0257 Oslo (NO); Yoon, Jae Myung, Katy, 77494 (US)
(74) Representative: Acapo Onsagers AS

(57) **Abstract**

Filtering system comprising
- at least a first and a second stage membrane filter,
- wherein the first stage membrane filter has a first stage feed inlet, a first stage permeate outlet and a first stage retentate outlet,
- wherein the second stage membrane filter has a second stage inlet, a second stage permeate outlet and a second stage reject retentate outlet,
- wherein the first stage retentate outlet is in fluid communication with the second stage inlet,
- wherein the system comprises pressure sensors (P1, P2, P3) for determining the differential pressure between the first stage feed inlet and the first stage retentate outlet (dP_{A/B}) and for determining the differential pressure between the second stage inlet and the second stage reject retentate outlet(dP_{C}),
- wherein the pressure sensors are in data communication with a data processor,
- wherein the data processor is configured to estimate a first slope of the differential pressure between the feed inlet and the retentate outlet from the first stage (slope dP_{A/B}), and a second slope of the differential pressure between the second stage inlet and the second stage reject retentate outlet (slope dP_{C}); and
- wherein the data processor is configured to identify fouling and to compare the estimated first and second slopes and thereby determine the type of fouling; and
- wherein the data processor is adapted to recommend or actuate a preselected cleaning action for the type of identified fouling.

## Description

The present invention relates to a system and method for early, quick and automatic identification and detection of membrane fouling types in a water treatment facility, especially a water nanofiltration sulphate removal system. Further the invention relates to controlling the cleaning of the filters based on the identified type of fouling.

### Background

One of the most commonly used methods to optimise recovery of oil and gas from a given reservoir is to inject seawater into the reservoir to maintain the reservoir pressure. In order to prevent clogging of the reservoir and to maintain injectivity, the seawater normally has chemicals added to prevent bio fouling and has particulate materials removed by filtration. Oxygen is then normally removed from the water to reduce its corrosiveness and to inhibit bacterial growth in the reservoir. The water for injection into the reservoir should be compatible with the existing water in the formation. In some reservoirs the formation water contains ions of barium and strontium. When seawater containing sulphate ions gets into contact with formation water containing barium and strontium ions, a scale called barium/strontium sulphate scale occurs. In such circumstances it is often considered financially and environmentally advantageous to remove this problem by reduction of the sulphate ions in the seawater before the seawater is injected into the hydrocarbon reservoir.

For the purpose of removal of sulphate from seawater, a specific nanofiltration membrane has been employed. The technology is based on selective removal of sulphate ions from the seawater while sodium ions remain in the seawater. Thus, the seawater retains its salinity when injected into the reservoir.

A Sulphate Reduction System (SRS) uses nanofiltration membranes which is a partial reverse osmosis process.

Nanofiltration refers to a special membrane process which rejects molecules in the approximate size range of 1 nanometre, hence the term "nanofiltration". NF operates in the realm between ultrafiltration and reverse osmosis. Organic molecules with molecular weight greater than 200 - 400 are rejected. Also, dissolved salts are rejected to some extent. Salts which have univalent anions (e.g. sodium chloride or calcium chloride), have rejections of 10 - 80%, whereas salts with divalent anions (e.g. magnesium, sulphate) have higher rejections of 90 - 99 %.

The nanofiltration membrane used in the SRS is specifically designed to remove sulphate ions from seawater, whilst allowing sodium and chloride to remain in the seawater. Thus, maintaining adequate salinity of seawater for injection purposes. For seawater injection service, the special developed nanofiltration membrane has several advantages compared to reverse osmosis. Since the membrane selectively removes sulphate ions, while letting the sodium and chloride remain in the seawater, the pressure required to overcome the separation is lower than for a reverse osmosis membrane. This implies that smaller pumps may be required than for a reverse osmosis plant. By preferentially removing sulphate ions, a high concentration of salts on the membrane surface may be avoided. When sodium and chloride remain in the seawater, i.e. are allowed to pass through the membrane, the salinity of the injection water is maintained. By maintaining the salinity of the injection water, stable reservoir clays and formation permeability is obtained.

In normal operation, the membrane in nanofiltration elements can become fouled by mineral scale, biological matter, colloidal particles and insoluble organic constituents. Deposits build up on the membrane surfaces during operation until they cause loss in normalized permeate flow, loss of normalized salt rejection, or both.

Filter elements should be cleaned when one or more of the below mentioned parameters are applicable:
- The normalized permeate flow drops 10%
- The normalized salt passage increases 5 - 10%
- The normalized pressure drop (feed pressure minus concentrate pressure) increases 10 - 15%

Cleaning may not restore the membrane element performance successfully if you wait too long. In addition, the time between cleanings becomes shorter as the membrane elements will foul or scale more rapidly.

### Prior art

US9,248,406B2 discloses a method for performance management of a membrane. The method includes detailed measurements including the hydrodynamic and solute permeability of the membrane.

WO2010/109265 describes a method and system for online optimization of a membrane filtration process. The method and system include receiving fouling parameters from a mathematical model, which includes the hydrodynamic and solute permeability of the membrane.

US9,314,742B2 discloses a system for reverse osmosis including a plurality of filter banks. To indicate the need for cleaning the system calculates the normalised permeate flow.

The prior art discloses a number of methods for optimising membrane filtering systems and provide indications for the need for cleaning. There is however still a need for improving the systems and provide information on the type of fouling such that the type and urgency of the cleaning can be adapted to the actual type of fouling.

### Objectives of the invention

The objective of the present invention is to provides a system and method for detection of membrane fouling type in a membrane filtering system, allowing for adapting the cleaning actions to the type of fouling.

A further aim is to provide a system that allows for adapting the urgency of the need to perform cleaning to the identified type of fouling.

A further aim is to reduce the use of cleaning solutions, especially the cleaning solutions that have a negative effect on the lifetime of the membrane filter.

It is the aim to detect the potential fouling type, then the operator is capable to tailor more foulant type specified CIP cleanings to clean more efficiently instead of performing the standard CIP (alkaline follow by acid) procedures. This can avoid unnecessary acid exposure of the nanofiltration (often polyamide) membranes that reduces its lifetime. Yet avoiding unnecessary chemical consumption and cleaning time i.e. improving system availability.

It is a further aim to provide a detection that is automated and fast and therefore reduces the time before required cleaning is initiated.

It is also an aim to provide a system that can be fully automated and designed to initiate the cleaning action based on the result of the detection.

The present invention provides a filtering system comprising
- at least a first and a second stage membrane filter,
- wherein the first stage membrane filter has a first stage feed inlet, a first stage permeate outlet and a first stage retentate outlet,
- wherein the second stage membrane filter has a second stage inlet, a second stage permeate outlet and a second stage reject retentate outlet,
- wherein the first stage retentate outlet is in fluid communication with the second stage inlet
- wherein the system comprises pressure sensors for determining the differential pressure between the first stage feed inlet and the first stage retentate outlet (dP_{A/B}) and for determining the differential pressure between the second stage inlet and the second stage reject retentate outlet (dP_{C}),
- wherein the pressure sensors are in data communication with a data processor,
- wherein the data processor is configured to estimate a first slope of the differential pressure between the feed inlet and the retentate outlet from the first stage (slope dP_{A/B}), and a second slope of the differential pressure between the second stage inlet and the second stage reject retentate outlet (slope dP_{C}); and
- wherein the data processor is configured to identify fouling and to compare the estimated first and second slopes and thereby determine the type of fouling; and
- wherein the data processor is adapted to recommend or actuate a preselected cleaning action for the type of identified fouling.

The term "data processor" as used herein refers to a device, such as a CPU. The data processor may include a display presenting the data and/or a possibility for the operator to interacting with the system. Alternatively, the system includes means for transferring the data to a portable device on which the operator may also interact with the system.

The term "slope of the differential pressure", is not meant to be limited to a smooth line or curve, but shall encompass any characteristic pressure changes over time, or any representative dP growth patterns.

The term "data communication" refers to transfer of signals and data. Data communication shall be understood to encompass electrical, optical or wireless communication.

The term "filter bank" shall be understood to encompass a set of two or more parallel membrane filters.

In one aspect of the system, the system comprises a first pressure sensor connected to the first stage feed inlet, a second pressure sensor connected to the first stage retentate outlet, and a third pressure sensor connected to second stage reject retentate outlet, for determining the differential pressure between the first stage feed inlet and the first stage retentate outlet and the differential pressure between the second stage inlet and the second stage reject retentate outlet.

In another aspect the system comprises pressure sensors, or delta pressure sensors, with fluid connections to the first stage feed inlet, to the first stage retentate outlet and to the second stage reject retentate outlet, for determining the differential pressure between the first stage feed inlet and the first stage retentate outlet (dP_{A/B}), and for determining the differential pressure between the second stage inlet and the second stage reject retentate outlet(dP_{C}).

In one aspect of the filtering system, the first stage membrane filter comprises a first and a second filter bank arranged in parallel and respectively having an inlet in fluid communication with a feed conduit to receive a feed fluid to the first and second filter banks and respectively having a permeate outlet in fluid communication with the first stage permeate outlet and respectively having a retentate outlet in fluid communication with the first stage retentate outlet.

In a further aspect of the filtering system, the system further has one or more flowmeters for identifying changes in permeate flow rates from the permeate outlets of the first stage or the second stage, or both membrane stages,
wherein the flowmeters are in communication with a permeate data processor, and the permeate data processor is further configured to identify a fouling problem source, and the permeate data processor is arranged to provide a data communication signal adapted to recommend or actuate a preselected corrective action for the identified problem source(s).

In one aspect of the system the permeate data processor is identical with the data processor, which performs both functions and allows for combined usage of the data.

In a further aspect of the filtering system the preselected corrective action is selected from the following actions:
- to increase or decrease upstream anti-scaling chemical dosing, or
- wash or replace upstream coarse, fine or ultrafiltration filters,
- or initiate service for any upstream equipment.

In yet another aspect of the filtering system, the system comprises at least one flow sensors connected to the feed inlet, or connected to the first stage permeate outlet, or connected to the second stage permeate outlet, or connected to both the first stage feed inlet and the one or more permeate outlets, wherein the at least one flow sensor is in data communication with the data processor.

In one aspect the membrane filters comprise nanofiltration membranes for sulphate removal.

In another aspect the membrane filters comprise reverse osmosis membranes for salt ion removal.

In yet another aspect of the filtering system, the system comprises at least one pressure sensor measuring the pressure at the feed inlet, wherein the pressor sensor is in data communication with the data processor.

In a further aspect the system comprises one or more temperature sensors in data communication with the data processor.

In yet another aspect the system comprises a cleaning in place (CIP) system comprising at least one tank with acidic cleaning solution and at least one tank with alkaline cleaning solutions, wherein the tanks are fluidly connectable with the first stage and the second stage filters.

The present invention further provides a method for fouling identification and detection of a filtering system according to the invention, wherein the method comprises:
- monitoring the feed pressure at the first stage feed inlet;
- determining the differential pressure between the first stage feed inlet and the first stage retentate outlet (dP_{A/B}) and the differential pressure between the second stage inlet and the second stage reject retentate outlet (dP_{C})
- estimating the slope of the differential pressure between the feed inlet and the first stage retentate outlet (slope dP_{A/B}) and the slope of the differential pressure between the second stage inlet and the second stage reject retentate outlet (slope dP_{C}),
- when the feed pressure increases
- identifying the fouling type by comparing the determined feed pressure slope dP_{A/B} with slope dP_{C}, according to the following conditions;

| | |
|---|---|
| if slope dP_{C} > slope dP_{A/B} | then mineral scaling is the fouling type |
| if slope dP_{C} < slope dP_{A/B} | then colloidal/algae scaling is the fouling type |
| if slope dP_{C} ≈ slope dP_{A/B} | then biological scaling is the fouling type. |

The situation slope dP_{C} ≈ slope dP_{A/B} means the slope of the of two differential pressures are approximately the same over the relevant period of time.

In one aspect the method further comprises initiating adapted cleaning based on the identified fouling type. The method provides for fast response to the identified fouling type, this can be automated or include an operator considering and approving the recommended action.

In yet another aspect of the method it comprises
initiating an acid soak if mineral scaling is the fouling type identified, or
initiating alkaline soak if colloidal/algae scaling is the fouling type identified, or
initiating alkaline clean if biological scaling is the fouling type identified.

In another aspect of the method, when the feed pressure is increasing and the slope dP_{A/B} and the slope dP_{C} are close to zero, the fouling is identified as low permeability fouling.

In a further aspect of the method, when the feed pressure is decreasing and the slope dP_{A/B} and the slope dP_{C} are close to zero, the fouling is identified as membrane failure.

In yet a further aspect the method comprises storing the data in a database and using historical data to operate the filtering system.

In another aspect the method comprises preparing injection water by sulphate removal using the first and second stage membrane filters.

The term "removal" as used herein refers to removing a considerable amount of the relevant compound but normally the compound will still be present in the filtered water but in a significant lower amount.

For providing injection water to a high strontium/barium sulphate scaling potential reservoir, seawater is treated in a sulphate removal membrane (nanofiltration) filtration system to remove sulphates to desired level (often <100ppm SO₄) prior to water injection. The cross-flow membrane filtration is carried out in two stages filtration process to achieve a typical overall 75% seawater recovery.

The presently one type of the spiral wound nanofiltration membranes used for sulphate reduction are pressure sensitive and are therefore not back-washable which is a cleaning mechanism employed for cleaning of other types membrane filters. For this type of membranes CIP is available cleaning method.

In one embodiment in a SRU application the nanofiltration membrane can have a pore size in range around 10 Å and a strong negatively charged surface. Chloride ions (Cl⁻) have an ionic diameter of 1.8 Å and a negatively one charge, thus the chloride ions easily pass through the surface of the membrane. The sulphate ions (SO₄²⁻) has an ionic diameter of 2.4 Å and a negatively double charge, thus because of the ionic charge, most of the sulphate ions are rejected off the membrane surface. Sodium (Na⁺) and magnesium (Mg⁺⁺) have ionic diameters 0.98 Å and 0.65 Å respectively, and both have a positive charge, they easily pass through the membrane. Due to some variation in pore size and charge on the membrane surface, not all sulphate ions are rejected and not all chlorine ions pass through the membrane. More than 99% of the sulphate ions remain on the feed side of the membrane (more than 99% rejection) and about 5% of the chlorine ions remain on the feed side of the membrane (approx. 95% passage).

The filtering system comprises at least a first, second and third filter bank, wherein the first and second filter banks are arranged in parallel and respectively have an inlet in fluid communication with a feed conduit to receive a feed fluid and respectively have a permeate outlet and a retentate outlet, wherein the third filter bank comprises an inlet in fluid communication with the retentate outlets from the first and second filter banks, a permeate outlet and reject retentate outlet. The produced filtered water is thus obtained as the combined permeate streams from the three filter banks.

It is possible to increase the number of filter banks, for instance by having a first stage with four parallel banks feeding their retentate to two parallel filter banks in a second stage feeding retentate to one filter bank in a third stage. This would increase the recovery range. Usually, more filtering system are run in parallel, often referred to as trains. When one train is undergoing cleaning the one or more other trains will continue production.

During use the efficiency of the filters will be reduced by fouling within the passages in the filter. The conditions and the composition of the seawater will influence the formation of the different types of fouling. The different types of fouling can be described as
a) Colloidal/algae
b) Scaling
c) Biofouling
d) Low permeability (e.g., dry/ organic fouling)

The present inventors have found that it is possible to distinguish between these types of fouling by studying the operational behavior of each membrane bank.

Type a) colloidal/algae is fouling by algae or colloidal particles.

Type b) scaling is formation of inorganic insolvable salts such as barium sulphate.

Type c) biofouling is formation of a biofilm on the surfaces of the membranes.

Type d) is fouling which effects the permeability without significantly effecting the differential pressure.

Further, the system will be able to detect e) failure in the membranes due for instance oxidation or acid damage.

To reduce these different types of fouling different cleaning in place (CIP) procedures should be selected. Without detailed knowledge of the fouling type the only option that would secure removing all types of fouling is a full cleaning involving both long term acid and alkaline soak. This would result in the use of large amount chemicals and a long non-productive cleaning period.

Frequent/inefficient CIP which compromised water injection availability is associated with high penalty cost.
Standard CIP can be ineffective and time consuming to redo the procedures without significant recovery
In conventional systems operator was unable to differentiate which CIP alerts are urgent compared to the others
In some instances of poor scaling inhibition or seawater recovery control, mineral scale will form on the second stage filter bank membranes. Mineral scale is known to grow exponentially and therefore there is an urgent need for the operator to perform the correct CIP (as soon as possible, within days) otherwise CIP will not be able to recover hard sulphate scales, and membrane replacement becomes the only option. Due to this urgency there will with limited knowledge on the fouling type be a tendency to clean too often, increasing the use of chemicals and wear of the membrane.

Acid clean is not often necessary if no inorganic fouling is identified. Very often acid is used to balance the charges of the membranes pores to avoid high sulphate passage after an alkaline clean. If sulphate passage is not over the spec. Acid clean can be done every 3-6months. Acid exposure should be minimised to prolong membrane lifetime. This can also reduce overall downtime due to CIP.

Total suspended solid (TSS) and biogrowth within the system due to poor disinfection control i.e. insufficient chlorination and biociding regime. The consequences are rapid increase in membrane dP i.e. frequent CIP is required and loss in water injection availability.

Typical seawater feed intake is only 10-50m below sea surface, within this zone seawater is rich with marine life and organisms. During algae blooming season, seawater intake quality can have higher total suspended solids than norm esp for particle size < 2microns. To improve fine TSS removal in prefiltration stage and prolong cartridge lifetime, coagulant is recommended. Coagulant dosing shall be adjusted accordingly to the feed water quality to avoid overdosed chemical ended up as organic fouling on membranes.

A data storage is available for a SRU control panel offshore. SRU system typically has 300-500 tags depending on the installation nameplate capacity. Only selected Historian data is important to trouble shoot the root cause of an upset event.

The present invention provides a method of identifying the type of fouling that has been building up on the membrane. This provides the possibility to initiate only the cleaning necessary to reduce the identified type of fouling. Further, biological and colloidal/algae fouling is removed efficiently with alkaline treatment and the membrane is resistant to alkaline treatment, therefore cleaning is not as urgently required. On the opposite cleaning/removing mineral scaling requires acid treatment to which the membrane is not very resistant, and there is an urgency in stopping the formation of mineral scaling to limit the cleaning time exposure and increasing the success of the cleaning.

In a preferred embodiment of the invention the cleaning operation is initiated when the delta pressure for an identified slope reaches a predefined threshold value. Particularly is this applied for when the identified scaling type is mineral scaling, where the threshold value preferably is preset to a value as low as practical possible.

The inventors have found that by studying the slope of the differential pressure dP of the first and second membrane banks slope dP_{A/B} and comparing with the slope of the differential pressure over the third filter bank, slope dP_{C} then the type of fouling can be identified.

For all cases a marked increase in the differential pressures is an indication of fouling, but the comparison provides further information.

| **Fouling types** | **General symptoms for fouling type:** |
|---|---|
| Scale formation | Significant slope dP_{C} > slope dP_{A/B} |
| Biofouling | slope dP_{A/B} similar to slope dP_{C} |
| Algae fouling | slope dP_{A/B} > slope dP_{C} |

Differential pressure as used herein is the pressure difference between the inlet and the retentate outlet. The differential pressure is different from the transmembrane pressure which is the pressure difference between the inlet and the permeate outlet.

Point-wise differential pressure (dP) measurement is noisy and difficult to compare one against another. In an embodiment of the present method the differential pressure is measures over a significant period of time, 0.5-3 days. Non-operational data is removed, such as measurements while the system is off-line or during start up. Then, a windowed (e.g. multiple hours of) differential pressure data is processed to estimate the dP growth (slope dP) with the modern regression algorithm. Slope dP is measured in pressure unit per time, such as bar/hour. After estimating slope dP, comparison becomes more convenient.

The dP growth patterns are correlated to different failure mode of the filter. For example, faster dP growth rate of Bank A and/or B than the dP growth rate of Bank C is related to colloidal/algae fouling. If faster dP growth rate of C than the dP growth rate of Bank A and/or B is related to scaling. If dP growth rates of Bank A, B, and C are increasing with similar pace, it is related to bio-fouling.

### Brief description of the drawings

The present invention will be described in further detail with reference to the enclosed figures.
Figure 1 illustrates the structure of the filtering system.
Figure 2 illustrates schematically the fouling type identification process.
Figure 3 is an illustration of the measured differential pressure.

### Principal description of the invention

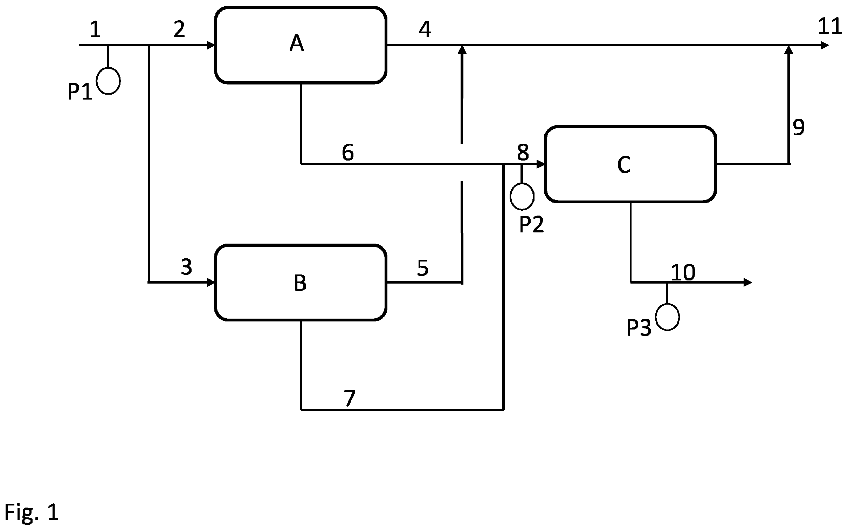

Figure 1 discloses the filter system with the at least three filter banks A, B and C. The feed of water to be filtered 1 is split into feed stream 2 to filter bank A and feed stream 3 to filter bank B. The obtain permeate streams 4 from bank A and 5 from bank B are combined to form part of the resulting filtered water stream 11. The retentate 6 from filter bank A and the retentate 7 from filter bank B make up the feed stream 8 to filter bank C. The permeate 9 from bank C is combined with the other permeate streams 4 and 5 to the resulting filtered water stream 11. The retentate 10 from filter bank C is discharged as a reject stream 10.

Also illustrated on figure 1 is one embodiment of the arrangement of the pressure indicators P1, P2 and P3. P1 measures the pressure of the feed at the inlet 1. P2 measures the pressure of the combined retentate streams 6 and 7. P3 measures the pressure of the reject stream 10.

The pressure sensors P1, P2 and P3 are in communication with a data processor (not shown) for fouling detection. The pressure difference between P1 and P2 and between P2 and P3 are calculated. Alternatively, the pressure difference can be measured if a differential pressure sensor is to the inlet and the retentate outlet of the filter banks.

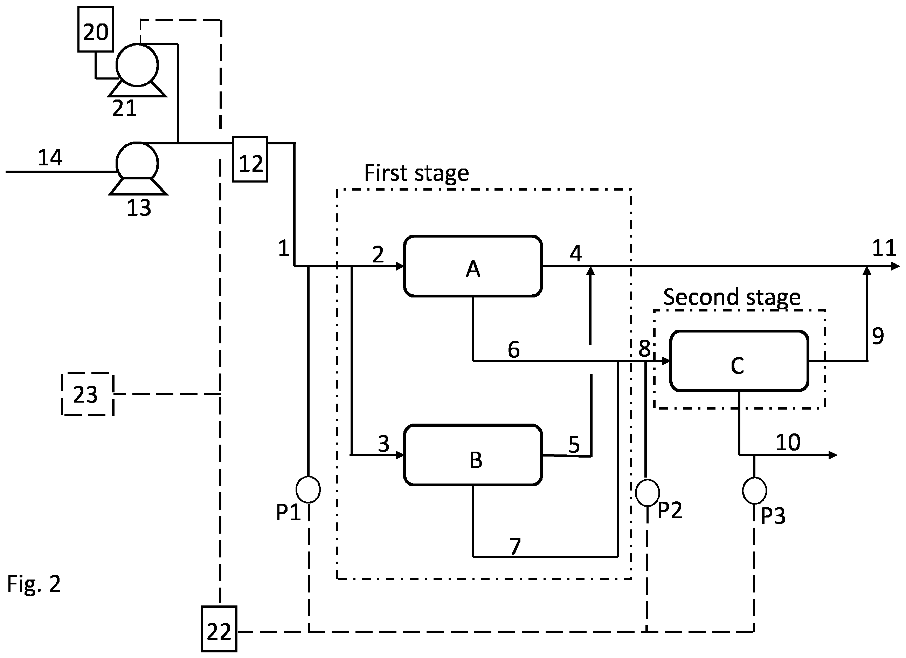

Figures 1 and 2 are illustrations of the main elements of the system. A person skilled in the art will know that in use the system will contain for instance valves regulating the flow in each conduit and the valves will be arranged to be controlled by a control unit. These well-known features have been omitted from the illustration to focus on the main elements relevant for the invention.

Figure 2 illustrates the first and second stage of the filter system. The pressure sensors P1, P2, P3 are in communication with the data processor 22.

Figure 2 illustrates an embodiment of the filter system with pre-treatment and CIP equipment. The water feed stream 14 is pump by pump 13 into a pre-treatment particle filter 12 removing solid particles from the water entering the filter banks.

When a need for cleaning is detected pump 13 and the flow of feed 14 is stopped. From the CIP tank 20 a cleaning solution is by CIP pump 21 feed to particle filter 12 and into the filter banks. The tank 20 may contain different cleaning solutions that can be selected depending on the type of fouling that has been detected.

The data processor 22 is in signal communication with the CIP pump 21 to actuate a cleaning action either directly or after having been approved by an operator. Optionally, the data processor is in communication with a controller 23 controlling other equipment including the pre-treatment, upstream addition of chemicals such as chlorine scavenger.

Alternative embodiments of the system include connecting the CIP tank upstream the feed pump 13, thereby using the feed pump to provide the flow of cleaning solution. Another alternative embodiment includes providing separate CIP tanks and pumps for the different types of cleaning procedures.

A person skilled in the art will appreciate that these alternatives can be freely combined within the scope of the present invention.

In one embodiment the differential pressure (dP) should be measured and recorded across each stage of filter banks. If the feed channels within the element become plugged, the dP will increase. It should be noted that the permeate flux will drop if feedwater temperature decreases. This is normal and does not indicate membrane fouling. Therefore, the system may also preferably include temperature sensors monitoring and reporting the temperature to the data processor. The system may also preferably include permeate flow sensors monitoring and communicating the flow rates of the permeate to the data processor. The system may preferably also include online permeate salt content measurement and reporting the flow salinity of the permeate.

A malfunction in the pretreatment, pressure control, or recovery can result in reduced product water output or an increase in salt passage.

Table 1 shows the characteristics of the different fouling types/failures and the cleaning action that should be recommended and/or actuated as well as the urgency of the cleaning action. The table lists both the observation with respect to the slope dP comparison and the change in the feed pressure.

The different cleaning actions are based on well-known procedures adapted to the knowledge of the type of identified fouling. Long soaks require treatment for hours, such as 4-8 hours, whereas an alkaline clean requires fare less downtime. Only the main ingredients of the cleaning solutions are listed and other compound that dissolves the fouling and allows for it to be transported out of the system may be included.

The giving pH ranges are all approximate values.

Urgency, reflects the potential damage of the fouling on the membrane. Signs of mineral scaling should be reacted upon as soon as practically possible, which will depend on the system.

In operation the system preferably collects detailed date of the behaviour of the actual installation. The data may be employed to fine tune the process and optimise the process. For this purpose, the detection unit comprises a database for storing said data and software to evaluate the current and other external operations.

**Table 1: Types of fouling, pressure identifiers and possible cleaning actions.**

| **Identified fouling types** | **Mineral Scaling** | **Colloidal Algae fouling** | **Biological fouling** | **Low permeability (e.g., dry/ organic fouling)** | **Oxidant damage (e.g. Chlorine etc.)** |
|---|---|---|---|---|---|
| **dP** | Marked increase slope dP_{C} > slope dP_{A/B} | Marked increase slope dP_{A/B} > slope dP_{C} | Marked increase slope dP_{A/B} ≈ slope dP_{C} | Normal | Normal |
| **Feed pressure** | Moderate increase | Increased | Marked increase | Marked increase | Decrease |
| **Preselectable cleaning action** | Acid Long Soak | Alkaline Long Soak | Alkaline clean | Alkaline Long Soak | Check chlorine scavenger dosing |
| | pH 1- 2 (H₃PO₄ or HCl) @ 25°C if not effective, pH 11-12.5 (chemical comprising EDTA) 25°C | pH 10.5-11.5 (comprising NaOH + EDTA) @ 35°C | pH 10.5-11.5 (comprising NaOH +EDTA) @ 35°C | pH 10.5-11.5 (comprising NaOH) @ 35°C | |
| **Response time/ Urgency** | CIP during early scale development, CIP as soon as practically possible (before meeting CIP thresholds) | CIP can be schedule within 1-2 weeks | CIP can be schedule within 1-2 weeks | CIP can be schedule within 1-2 weeks | Order replacement membranes |

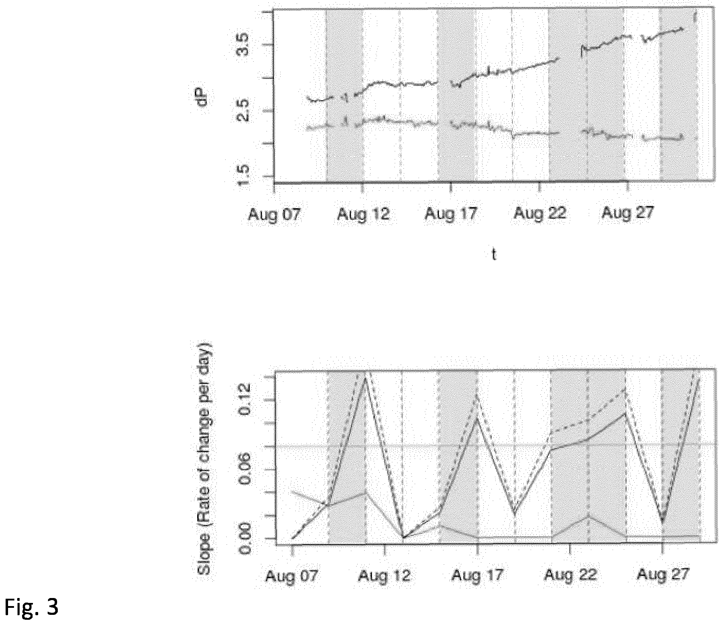

Figure 3 illustrates measurements on a membrane system wherein scaling is taking place. The top picture shows the development in differential pressure over time. The upper graph is the dP over bank C and the lower graph is dP for banks A and B. In lower picture shows the slope dP, here the upper solid line is the slope of dP_{C}, whereas the lower graph is slope dP_{A/B}. Slope of dP_{C} is larger than slope dP_{A/B} showing that scaling has occurred.
1. The following items are disclosed herewith:Filtering system comprising
- at least a first and a second stage membrane filter,
- wherein the first stage membrane filter has a first stage feed inlet, a first stage permeate outlet and a first stage retentate outlet,
- wherein the second stage membrane filter has a second stage inlet, a second stage permeate outlet and a second stage reject retentate outlet,
- wherein the first stage retentate outlet is in fluid communication with the second stage inlet,
- wherein the system comprises pressure sensors (P1, P2, P3) for determining the differential pressure between the first stage feed inlet and the first stage retentate outlet (dP_{A/B}) and for determining the differential pressure between the second stage inlet and the second stage reject retentate outlet(dP_{C}),
- wherein the pressure sensors are in data communication with a data processor,
- wherein the data processor is configured to estimate a first slope of the differential pressure between the feed inlet and the retentate outlet from the first stage (slope dP_{A/B}), and a second slope of the differential pressure between the second stage inlet and the second stage reject retentate outlet (slope dP_{C}); and
- wherein the data processor is configured to identify fouling and to compare the estimated first and second slopes and thereby determine the type of fouling; and
- wherein the data processor is adapted to recommend or actuate a preselected cleaning action for the type of identified fouling.
2. Filtering system according to item 1, wherein the first stage membrane filter comprises a first and a second filter bank (A,B) arranged in parallel and respectively having an inlet in fluid communication with a feed conduit to receive a feed fluid to the first and second filter banks (A,B) and respectively having a permeate outlet in fluid communication with the first stage permeate outlet and respectively having a retentate outlet in fluid communication with the first stage retentate outlet.
3. Filtering system according to item 1 or 2, wherein the system further has one or more flowmeters for identifying changes in permeate flow rates from the permeate outlets of the first stage or the second stage, or both membrane stages, wherein the flowmeters are in communication with a permeate data processor, and the permeate data processor is further configured to identify a fouling problem source, and the permeate data processor is arranged to provide a data communication signal adapted to recommend or actuate a preselected corrective action for the identified problem source(s).
4. Filtering system according to item 3, wherein the preselected corrective action is selected from the following actions:
- to increase or decrease upstream anti-scaling chemical dosing, or
- wash or replace upstream coarse, fine or ultrafiltration filters,
- or initiate service for any upstream equipment.
5. Filtering system according to any one of the items 1-4, wherein the system comprises at least one flow sensors connected to the feed inlet, or connected to the first stage permeate outlet, or connected to the second stage permeate outlet, or connected to both the first stage feed inlet and the one or more permeate outlets, wherein the at least one flow sensor is in data communication with the data processor.
6. Filtering system according to any one of the items 1-5, wherein the membrane filters comprise nanofiltration membranes for sulphate removal.
7. Filtering system according to any one of the items 1-6, wherein the membrane filters comprise reverse osmosis membranes for salt ion removal.
8. Filtering system according to any one of the items 1-7, wherein the system comprises at least one pressure sensor measuring the pressure at the feed inlet, wherein the pressor sensor is in data communication with the data processor.
9. Filtering system according to any one of the items 1-8, wherein the system comprises one or more temperature sensors in data communication with the data processor.
10. Filtering system according to any one of the items 1-9, wherein the system comprises a cleaning in place system comprising at least one tank with acidic cleaning solution and at least one tank with alkaline cleaning solutions, wherein the tanks are fluidly connectable with the first stage and the second stage filters.
11. Method for fouling identification and detection of a filtering system according to any one of the items 1-10, wherein the method comprises:
- monitoring the feed pressure at the first stage feed inlet;
- determining the differential pressure between the first stage feed inlet and the first stage retentate outlet (dP_{A/B}) and the differential pressure between the second stage inlet and the second stage reject retentate outlet (dP_{C})
- estimating the slope of the differential pressure between the feed inlet and the first stage retentate outlet (slope dP_{A/B}) and the slope of the differential pressure between the second stage inlet and the second stage reject retentate outlet (slope dP_{C}),
- when the feed pressure increases
- identifying the fouling type by comparing the determined feed pressure slope dP_{A/B} with slope dP_{C}, according to the following conditions;

| | |
|---|---|
| if slope dP_{C} > slope dP_{A/B} | then mineral scaling is the fouling type |
| if slope dP_{C} < slope dP_{A/B} | then colloidal/algae scaling is the fouling type |
| if slope dP_{C} ≈ slope dP_{A/B} | then biological scaling is the fouling type. |

12. Method according to item 11, wherein the method comprises initiating adapted cleaning based on the identified fouling type.
13. Method according to item 12, wherein the method comprises
initiating an acid soak if mineral scaling is the fouling type identified, or
initiating alkaline soak if colloidal/algae scaling is the fouling type identified, or
initiating alkaline clean if biological scaling is the fouling type identified.
14. Method according to any one of the items 11-13, wherein if the feed pressure is increasing and the slope dP_{A/B} and the slope dP_{C} are close to zero, the fouling is identified as low permeability fouling.
15. Method according to any one of the items 11-13, wherein if the feed pressure is decreasing and the slope dP_{A/B} and the slope dP_{C} are close to zero, the fouling is identified as membrane failure.
16. Method according to any one of the items 11-15, wherein the method comprises storing the data in a database and using historical data to operate the filtering system.
17. Method for according to any one of the items 11-16, wherein the method comprises preparing injection water by sulphate removal using the first and second stage membrane filters.

## Claims

1. Filtering system comprising
- at least a first and a second stage membrane filter,
- wherein the first stage membrane filter has a first stage feed inlet, a first stage permeate outlet and a first stage retentate outlet,
- wherein the second stage membrane filter has a second stage inlet, a second stage permeate outlet and a second stage reject retentate outlet,
- wherein the first stage retentate outlet is in fluid communication with the second stage inlet,
- wherein the system comprises pressure sensors (P1, P2, P3) for determining the differential pressure between the first stage feed inlet and the first stage retentate outlet (dP_{A/B}) and for determining the differential pressure between the second stage inlet and the second stage reject retentate outlet(dP_{C}),
- wherein the pressure sensors are in data communication with a data processor,
- wherein the data processor is configured to estimate a first slope dP_{A/B} of the differential pressure between the feed inlet and the retentate outlet from the first stage, and a second slope dP_{C} of the differential pressure between the second stage inlet and the second stage reject retentate outlet; and
- wherein the data processor is configured to identify fouling and to compare the estimated first and second slopes and thereby determine the type of fouling; and
- wherein the data processor is adapted to recommend or actuate a preselected cleaning action for the type of identified fouling.

2. Filtering system according to claim 1, wherein the first stage membrane filter comprises a first and a second filter bank (A,B) arranged in parallel and respectively having an inlet in fluid communication with a feed conduit to receive a feed fluid to the first and second filter banks (A,B) and respectively having a permeate outlet in fluid communication with the first stage permeate outlet and respectively having a retentate outlet in fluid communication with the first stage retentate outlet.

3. Filtering system according to claim 1 or 2, wherein the system further has one or more flowmeters for identifying changes in permeate flow rates from the permeate outlets of the first stage or the second stage, or both membrane stages, wherein the flowmeters are in communication with a permeate data processor, and the permeate data processor is further configured to identify a fouling problem source, and the permeate data processor is arranged to provide a data communication signal adapted to recommend or actuate a preselected corrective action for the identified problem source(s).

4. Filtering system according to claim 3, wherein the preselected corrective action is selected from the following actions:
- to increase or decrease upstream anti-scaling chemical dosing, or
- wash or replace upstream coarse, fine or ultrafiltration filters,
- or initiate service for any upstream equipment.

5. Filtering system according to any one of the claims 1-4, wherein the system comprises at least one flow sensors connected to the feed inlet, or connected to the first stage permeate outlet, or connected to the second stage permeate outlet, or connected to both the first stage feed inlet and the one or more permeate outlets, wherein the at least one flow sensor is in data communication with the data processor.

6. Filtering system according to any one of the claims 1-5, wherein the membrane filters comprise nanofiltration membranes for sulphate removal.

7. Filtering system according to any one of the claims 1-6, wherein the membrane filters comprise reverse osmosis membranes for salt ion removal.

8. Filtering system according to any one of the claims 1-7, wherein the system comprises at least one pressure sensor measuring the pressure at the feed inlet, wherein the pressor sensor is in data communication with the data processor.

9. Filtering system according to any one of the claims 1-8, wherein the system comprises a cleaning in place system comprising at least one tank with acidic cleaning solution and at least one tank with alkaline cleaning solutions, wherein the tanks are fluidly connectable with the first stage and the second stage filters.

10. Method for fouling identification and detection of a filtering system according to any one of the claims 1-9, wherein the method comprises:
- monitoring the feed pressure at the first stage feed inlet;
- determining the differential pressure between the first stage feed inlet and the first stage retentate outlet (dP_{A/B}) and the differential pressure between the second stage inlet and the second stage reject retentate outlet (dP_{C})
- estimating the slope dP_{A/B} of the differential pressure between the feed inlet and the first stage retentate outlet and the slope dP_{C} of the differential pressure between the second stage inlet and the second stage reject retentate outlet,
- when the feed pressure increases
- identifying the fouling type by comparing the determined feed pressure slope dP_{A/B} with slope dP_{C}, according to the following conditions;
| | |
|---|---|
| if slope dP_{C} > slope dP_{A/B} | then mineral scaling is the fouling type |
| if slope dP_{C} < slope dP_{A/B} | then colloidal/algae scaling is the fouling type |
| if slope dP_{C} ≈ slope dP_{A/B} | then biological scaling is the fouling type. |

11. Method according to claim 10, wherein the method comprises initiating adapted cleaning based on the identified fouling type.

12. Method according to claim 11, wherein the method comprises
initiating an acid soak if mineral scaling is the fouling type identified, or
initiating alkaline soak if colloidal/algae scaling is the fouling type identified, or
initiating alkaline clean if biological scaling is the fouling type identified.

13. Method according to any one of the claims 10-12, wherein if the feed pressure is increasing and the slope dP_{A/B} and the slope dP_{C} are close to zero, the fouling is identified as low permeability fouling, or wherein if the feed pressure is decreasing and the slope dP_{A/B} and the slope dP_{C} are close to zero, the fouling is identified as membrane failure.

14. Method according to any one of the claims 10-13, wherein the method comprises storing the data in a database and using historical data to operate the filtering system.

15. Method for according to any one of the claims 10-14, wherein the method comprises preparing injection water by sulphate removal using the first and second stage membrane filters.
